# EUROPEAN PATENT APPLICATION

(11) **EP 1 804 489 A1**
(43) Date of publication of application: **04.07.2007**
(21) Application number: 05301114.4
(22) Date of filing: 27.12.2005
(51) Int. Cl.: H04N 5/225, H04N 9/097

(54) **Color separation optical system for a colour television camera**

(71) Applicant: Thomson Licensing, 92100 Boulogne-Billancourt (FR)
(72) Inventor: Roctus, Jerry, 4567 AL Clinge (NL); van der Weegen, Franciscus Petrus, 4651 KB Steenbergen (NL); Verkuijen, Robert, 5694 LV Son & Breugel (NL); van Hoek, Erwin, 5612 NV Eindhoven (NL)
(74) Representative: Rossmanith, Manfred

(57) **Abstract**

A photo-electric conversion device for generates electrical signals in response to the light from an optical system including a prism assembly having plural light emitting faces. The prism assembly separates the light from the optical system into plural light components, including plural solid-state sensors ad joint to the light emitting faces of the prism assembly. The light emitting faces are provided with adhering areas to fix a first surface of a spacer with glue on each light emitting face. Each spacer has a second metalized surface appropriate for stiffly connecting one solid-state sensor by soldering.

## Description

### Field of the invention

The present invention is related to a photo-electric conversion device according to claim 1. More particularly, the invention is related to a photo-electric conversion device for a colour television camera having a prism assembly for colour separation of the incoming light beams. The prism assembly cooperates with solid-state sensors to produce component images in the primary colours red, green and blue.

### Background of the invention

From US 4,916,529 an imaging device utilising solid-state image sensors combined with a beam splitting prism is known. Each solid-state image sensor is arranged in a ceramic casing provided with solder layers on the rim portion of the casing. Corresponding soldering islands are provided on monochromatic colour trimming filters arranged on the colour separation prism. The solid-state image sensors are directly soldered onto the colour trimming filters. The gap between the glass solder layer on the colour trimming filter and the glass solder layer on the casing of solid-state image sensor is filled with ordinary solder. In this way a relatively thick soldering connection is created introducing displacements and stress due to thermal expansion and contraction of the solder having a different thermal expansion coefficient than the glass of the colour trimming filter and the ceramic of the casing of the solid-state sensor.

In US 4,323,918 an optical assembly for a colour television camera including a colour splitting prism assembly is disclosed. White light is entering an entry port of the prism assembly and red, green, and blue colour components of the light appear at the output ports, which are provided with corresponding trimming filters. The light components are captured by corresponding CCD sensors. A ceramic spacer is bonded to the surface of the trim filter and to the casing of the CCD sensor by UV curing bonding agent.

### Summary of the invention

It is, therefore, desirable to provide a photo-electric conversion device for a colour television camera which is less susceptible to environmental influences like temperature and humidity as cameras known in the art.

The invention, therefore, suggests a photo-electric conversion device for generating electrical signals in response to the light from an optical system including a prism assembly having plural light emitting faces. The prism assembly separates the light from the optical system into plural light components, including plural solid-state sensors adjoint to the light emitting faces of the prism assembly. According to the invention the light emitting faces are provided with adhering areas to fix a first surface of a spacer with glue on each light emitting face. Each spacer has a second metalized surface appropriate for stiffly connecting one solid-state sensor by soldering.

In one embodiment the spacer is made from a ceramic material. The solid state sensor can be mounted in a housing made from ceramic material. Advantageously the spacer and the housing of the sold-state sensor can be made from the same ceramic material.

In a preferred embodiment of the invention the spacer includes two separate spacer parts. Advantageously, the spacer parts can be arranged symmetrically with respect to the normal of the light emitting face, respectively.

The second surface of the spacer can have soldering areas being arranged symmetrically to the normal of the respective light emitting face. The soldering areas of the spacer may be pretinned.

In a useful embodiment a bellow is arranged between the solid-state sensor and the light emitting face. Preferably, the bellow can be removable to allow cleaning of the sold-state sensor.

In another embodiment of the invention a solder interface is integrated directly onto the solid-state sensors to reduce components and interfaces.

In yet another embodiment adhesive and soldering surfaces are parallel to the light emitting faces of the prism assembly.

In an advantageous embodiment of the invention a thermal conductive prop is fixed to the sensor housing.

### Brief description of the drawings

The invention will be better understood and other particular features and advantages will become apparent on reading the following description appended with drawings. It shows:
- Fig. 1: a schematic block diagram of a television camera;
- Fig. 2: a perspective schematic view of the photo-electric conversion device according to the invention;
- Fig. 3: the photo-electric conversion device of Fig. 1 seen from another direction; and
- Fig. 4: a schematic visualisation of the sensor alignment process.

### Detailed description of the embodiments

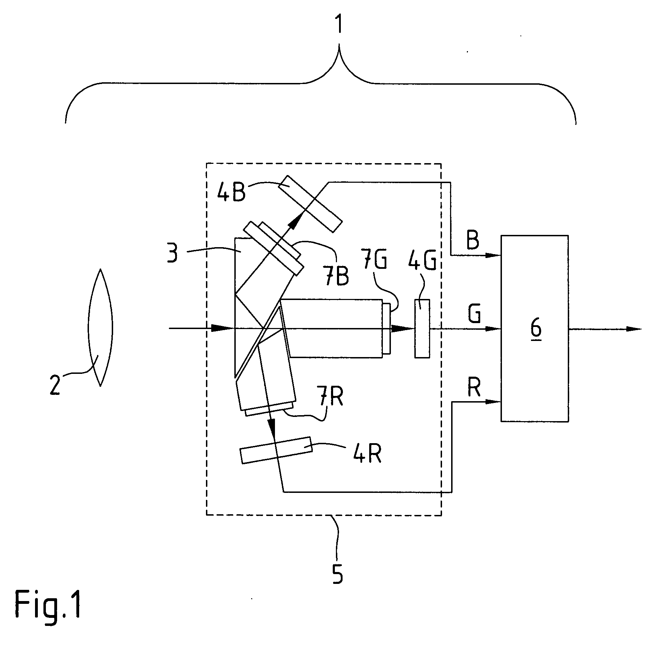

Fig. 1 is a schematic block diagram of an electronic television camera employing a photo-electric conversion device according to the invention. The camera as a whole is designated with the reference number 1. It comprises an object lens 2 for capturing the light of an image. The object lens 2 directs the light to a prism assembly 3 dividing the incoming light from the object lens 2 into the three primary colours red (R), green (G) and blue (B). Thus, the prism assembly 3 outputs the three colour components of the captured image at three separate light emitting faces 7R, 7B, 7G. Each colour component R, G, B, is captured by a separate image sensor 4R, 4G, 4B optically coupled to the respective light emitting face of the prism assembly 3. The image sensors 4R, 4G, 4B are commercially available CCD array sensors having 4k pixels in the horizontal direction and 2k pixels in the vertical direction. However, it should be noted that any other kind of photo sensitive arrays sensor can be used in other embodiments of the present invention such as CMOS sensors. Similarly, the number of pixels in the vertical and horizontal direction may vary.

Though in the schematic block diagram of the camera 1 in Fig. 1 the prism assembly 3 and the image sensors 4R, 4G, 4B are shown as separate components, in reality these components form a stiff and solid mechanical unit. This mechanical unit is also called "optical module" 5. The image sensors 4R, 4G, 4B convert the red, green, and blue component image into electrical output signals, respectively. The electrical output signals of the image sensors 4R, 4G, and 4B are connected to a signal processing unit 6. Appropriate signal processing units 6 are known in the art and are not part of the present invention. It is apparent from Fig. 1 that the image sensors 4R, 4G, 4B must be properly aligned with respect to each other to enable the camera to generate a true representation of the captured image. With "properly aligned" it is meant that corresponding image points of the component image are imaged onto corresponding locations on the image sensors 4R, 4G, and 4B. In this way it is possible to generate a true reproduction of the colour image.

In order to achieve the image quality of the camera, which is demanded by the customers, it is necessary to align the image sensors 4R, 4B for the red and the blue component image with respect to the image sensor 4G for the green component image on a submicron level. That means all elements for fixing the image sensors 4R, 4G, 4B on the light emitting faces 7R, 7B, 7G of the prism assembly 3 are critical to meet the mentioned quality requirements. It is well known in the art that environmental and functional conditions as well as conditions during the manufacturing of the camera have an impact on the positioning accuracy of the image sensors. These conditions encompass temperature, humidity, external forces and internal stress caused by adhesives and/or fixation methods. Though this list may not be complete, it contains at least some of the most important factors influencing the positioning accuracy.

By controlling the following conditions it is possible to achieve a very accurate alignment and fixation process to yield and keep the set goals on a submicron level during the production and the lifetime of the camera. Controlling the temperature during the alignment and fixation as well as during the use of the cameras helps to reduce mechanical stress caused by different temperature expansion coefficients of different materials used to build the optical module 5. Obviously, temperature changes during the use of a camera have a similar detrimental effect with regard to the positioning accuracy but are much more difficult to control. The most effective counter measure against a reduction of positioning accuracy due to temperature effects is to use materials having, if possible, the same or at least very similar temperature expansion coefficients.

Changes in humidity may also have an influence on the positioning accuracy because many types of glue expand or contract following an increase or a decrease of ambient humidity.

Finally, it is necessary to control external forces acting upon the sensor during the production and lifetime of the camera. In particular, any mechanical contact with any structural component of the camera has to be avoided.

In addition to the requirements related to the quality of the camera, camera manufacturers also face demands to reduce costs of the utilized material, to increase recycle ability of the camera, and last but not least, to provide good cleaning conditions to increase the yield during the production of the camera.

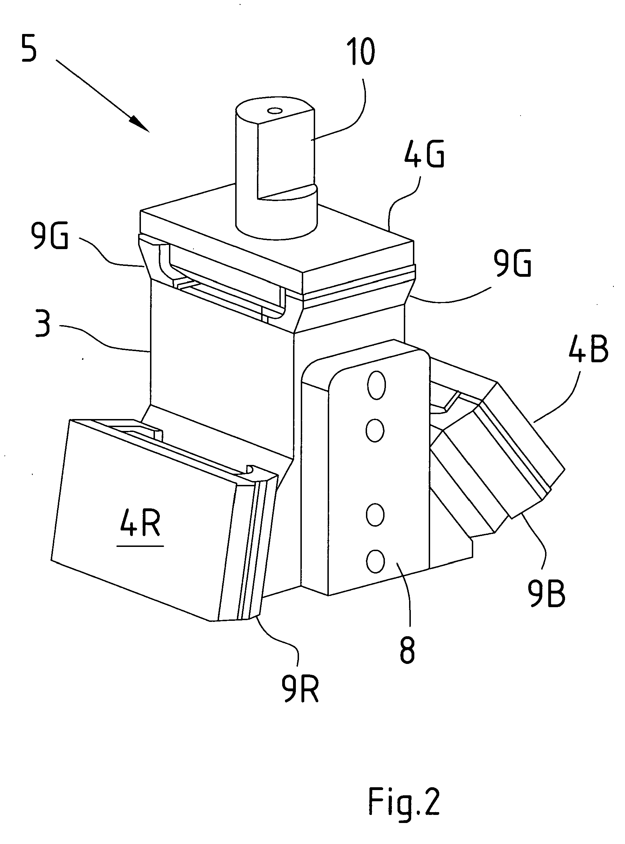

Fig. 2 shows a perspective view of the optical module 5. The prism assembly 3 is screwed to a fixing bracket 8. Each of the light emitting faces of the prism assembly 3 is provided with a ceramic spacer 9R, 9G, 9B, respectively. For the sake of simplicity the following description is limited to the components related to the green image. The spacer 9G is composed of two separate and identical parts mounted on opposing sides of the light emitting face on the prism assembly. On the other side of the spacer 9G - opposite to the side of the light emitting face - the image sensor 4G is arranged. The casing of the image sensor 4G is provided with a thermal conductive prop 10 which is used to position the image sensor 4G during the alignment procedure of the optical module. It is noted that each of the other image sensors 4R and 4B also is provided with identical thermal props, which have been omitted in Fig. 2 for the sake of clarity. The mechanical structure to securely fix the image sensors 4R, 4B in position is identical to that for image sensor 4G including two-part spacers 9R, 9B.

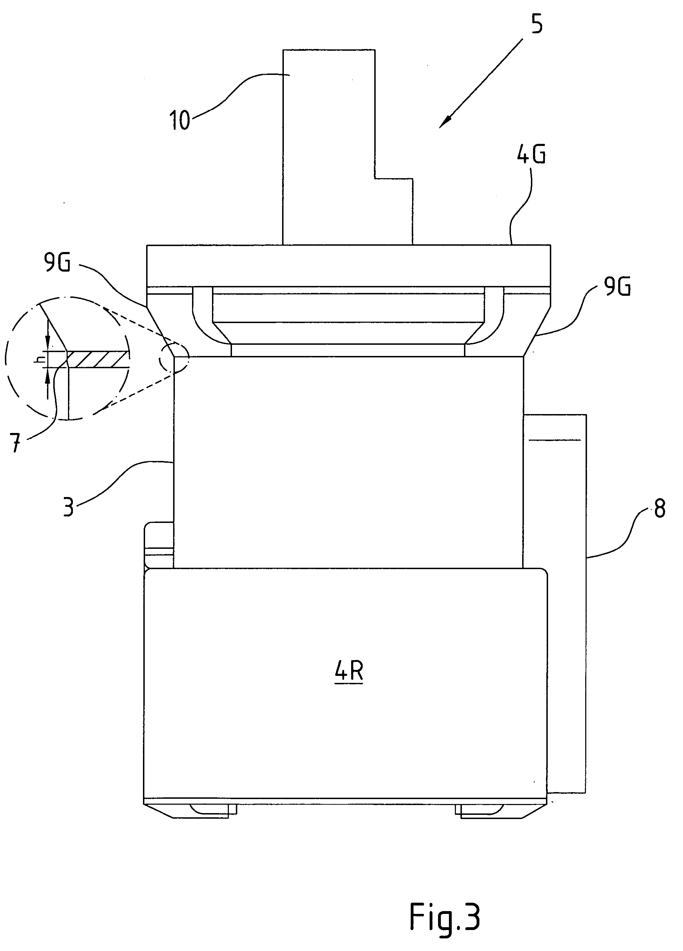

Fig. 3 shows the optical module 5 in a lateral view from the side of the image sensor 4R. In this view the mechanical structure fixedly connecting the image sensor 4G to the prism assembly 3 is more clearly visible. The spacer portions 9G are glued onto the face of the prism assembly 3 emitting the green light component forming a glue-gap 7, which is shown as an enlarged detail in Fig. 3. The utilized adhesive is a stiff humidity resistant adhesive that is commercially available. The height h of the glue-gap 7 is accurately controlled to decrease the mechanical stress on the arrangement due to the remaining small differences of the thermal expansion coefficients of the adhesive, the glass of the prism assembly 3 and the ceramic spacer 9B, respectively. The size of the glue surface has been optimized in a trade-off between two opposing trends: The larger the glue surface the higher the stiffness and the smaller the influence of humidity is. Taken this alone it would be desirable to make the glue surface as big as possible. However, an increasing glue surface also increases the stress induced by thermal expansion. Consequently, the glue surface has been chosen as small as possible for providing sufficient mechanical rigidity and resistance against humidity.

The size of the glue surface typically is in the range between 3 to 8 mm in a first direction and in the range of 12 to 17 mm in a second direction perpendicular to the first direction. It is also noted that the glue gap is parallel to the focus direction because in this direction the positioning requirements are least strict compared to the lateral directions perpendicular to the focus direction. Thus, if the adhesive expands or shrinks it mainly influences the focus and only to a much smaller extent the registration accuracy.

The ceramic spacer is provided with a metal coating that is solderable and has a high temperature resistance, as well as a high tensile strength. As it has already described, the one side of the ceramic spacer is glued onto the colour splitter. The other side is soldered onto the sensor housing. In an alternative embodiment the ceramic spacer is pretinned on the surface to be soldered.

It is to be noted that in the present embodiment of the invention the ceramic spacer has the same composition as the sensor housing. This decreases stress due to the increase or decrease of ambient temperature. The ceramic spacer does not pick up heat, which is induced by heating during the soldering process. The soldering process itself will be addressed in more detailed further below. This fact also reduces mechanical stress created during the mechanical fixation. At the same time the ceramic material of the spacer has good adhesion qualities for the glue which is used to fix it onto the light splitting prism assembly. Furthermore, the ceramic material is a very stiff material that can resist substantial external forces without any kind of deformation. The thermal expansion coefficient of the ceramic material is approximately 10⁻⁷ K⁻¹.

The corresponding metalized surface of the sensor housing is chosen to provide good solder ability. One advantage of the solder connection is that it reduces the number of elements between the prism assembly and the sensor. The metalized layer has high temperature resistance and good wetting properties for the solder process. The metalized layer is not pre-tinned to achieve a particularly thin solder connection than otherwise possible. Similar to the ceramic material the metalized surface is also chosen such that it resists tensile and shear stress. Due to fewer parts a higher stiffness of the assembly is possible and at the same time there are less assembly steps decreasing the required time for production and even more important decreasing the possibility of damaging the sensor and the prism assembly 3 during assembling. As it has already been mentioned above, the described arrangement provides a higher temperature and humidity resistance. Due to a reduced number of parts, there is also a smaller tolerance build up on the finalized assembly. The solder interfaces are chosen symmetrical to the sensor to allow for eliminating remaining forces, e.g. by varying ambient temperatures. The selected shape allows for low force tin-adding prior to the soldering process.

In other embodiments of the invention the ceramic material of the spacers has a different composition than the ceramic material of the housings of the solid state sensors.

The thermal conductive prop 10 is fixed to the sensor housing directly under the sensor for temperature control during the solder process and during the lifetime of the camera. At the same time the prop 10 provides for a mechanical interface for the alignment machine to achieve the most direct possible coupling between the sensor 4R, 4G, or 4B and the alignment machine for the highest possible stiffness and the least tolerance build-up.

The solder connection has the advantage that it enables a shorter production time and it increases recycle ability in comparison to gluing, increases stiffness, and decreases the displacement after alignment. The solder that has been chosen is commercially available under the brand name "Indalloy" and has a low melting temperature to reduce the temperature impact on the positioning accuracy during soldering. The resulting temperature due to melting temperature of the solder is also below the threshold temperature having a significant impact on the mechanical stability of the adhesive below the threshold temperature of the adhesives which is used to fix the ceramic spacer on the prism assembly and the CCD chip in its casing.

Finally, a bellow (not shown in Fig. 3) will surround the optical parts to prevent flux gazes from entering during the solder process and the lifetime of the camera. The bellow has been designed so that it will induce the lowest possible force during alignment. During the normal operation of the camera, the bellow reduces reflections. The bellow can be placed at its proper position prior to the alignment of the sensors that it is still removable for cleaning.

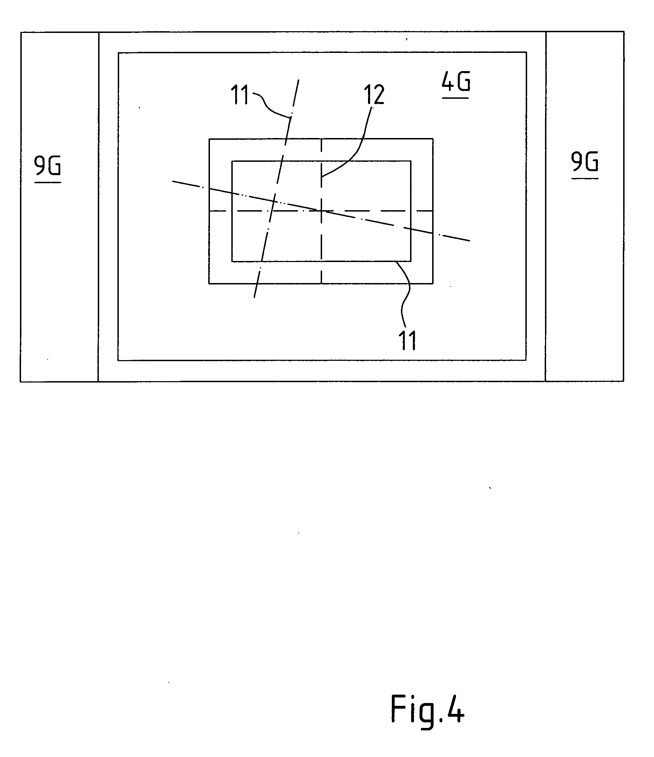

The alignment process itself is effected in a conventional way. I.e. the sensor 4G for the green light component is fixed on the spacer 9G by observing a test pattern 11 on a screen while the test pattern is captured by the optical module. Fig. 4 displays schematically the alignment process in a view from the light emitting face 7G towards the sensor 4G. The test pattern is illustrated in Fig. 4 as a first hair cross 11 that has to be brought into registration with a second hair cross 12 indicating the geometric centre of the sensor 4G. For the sake of clarity and better understanding of the invention the displacement of the hair cross 11 relative to the hair cross 12 is highly exaggerated in Fig. 4. The hair cross 11 is only one example for a test pattern and many other types of test patterns can be conceived by a person skilled in the art. Especially test patterns including a circle may be found useful. The sensor 4G is aligned with respect to the light emitting face of the prism assembly 3 until the lines of the test pattern are in registration with fixed lines on the monitor. After the sensor 4G for the green light component has been fixed the procedure described above is essentially repeated for the remaining two sensors 4R and 4B while it is observed that the currently aligned sensor is in registration with the one or two previously aligned sensors.

## Claims

1. Photo-electric conversion device for generating electrical signals in response to the light from an optical system including a prism assembly (3) having plural light emitting faces (7R, 7G, 7B), wherein the prism assembly (3) separates the light from the optical system (2) into plural light components,
- including plural solid-state sensors (4R, 4G, 4B) adjoint to the light emitting faces (7R, 7G, 7B) of the prism assembly (3),
- **characterised in that**
the light emitting faces are provided with adhering areas to fix a first surface of a spacer (9R, 9G, 9B) with glue on each light emitting face, and that each spacer has a second metalized surface appropriate for connecting one solid-state sensor by soldering.

2. Device according to claim 1, wherein the spacer (9R, 9G, 9B) is made form a ceramic material.

3. Device according to claim 1, wherein the solid state sensor (4R, 4G, 4B) is mounted in a housing made from ceramic material.

4. Device according to claims 2 and 3, wherein the spacer and the housing of the solid-state sensor (4R, 4G, 4B) are made from the same ceramic material.

5. Device according to claim 1, wherein the spacer (9R, 9G, 9B) includes two separate spacer parts.

6. Device according to claim 5, wherein the spacer parts are arranged symmetrically with respect to the normal of the light emitting face, respectively.

7. Device according to claim 1, wherein the second surface of the spacer has soldering areas being arranged symmetrically to the normal of the respective light emitting face.

8. Device according to claim 7, wherein the soldering areas of the spacer (9R, 9G, 9B) is pretinned.

9. Device according to claim 1, wherein a bellow is arranged between the solid-state sensor and the light emitting face.

10. Device according to claim 9, wherein the bellow is removable to allow cleaning of the sold-state sensor.

11. Device according to claim 3, wherein a solder interface is provided directly on the solid-state sensors to reduce components and interfaces.

12. Device according to claim 1, wherein adhesive and soldering surfaces are parallel to the light emitting faces (7R, 7G, 7B) of the prism assembly.

13. Device according to claim 1, wherein a thermal conductive prop (10) is fixed to the sensor housing.
